(19) Europäisches Patentamt
European Patent Office
Office européen des brevets

(11) Veröffentlichungsnummer: **0 475 108 B1**

# (12) EUROPÄISCHE PATENTSCHRIFT

(45) Veröffentlichungstag der Patentschrift: **21.09.94**

(51) Int. Cl.$^5$: **C09D 5/03**, C09D 201/06, C09D 133/00

(21) Anmeldenummer: **91113728.9**

(22) Anmeldetag: **16.08.91**

## (54) Pulverlacke und die Verwendung von ausgewählten Bindemittelkombinationen für Pulverlacke.

(30) Priorität: **29.08.90 DE 4027281**

(43) Veröffentlichungstag der Anmeldung:
**18.03.92 Patentblatt 92/12**

(45) Bekanntmachung des Hinweises auf die Patenterteilung:
**21.09.94 Patentblatt 94/38**

(84) Benannte Vertragsstaaten:
**AT BE CH DE ES FR GB IT LI NL SE**

(56) Entgegenhaltungen:
**EP-A- 0 445 639**
**US-A- 4 211 691**

(73) Patentinhaber: **BAYER AG**

**D-51368 Leverkusen (DE)**

(72) Erfinder: **Wamprecht, Christian, Dr.**
**Regattastrasse 20**
**W-4040 Neuss 22 (DE)**
Erfinder: **Kreuder, Hans-Joachim, Dr.**
**Auf Rothenfeld 23a**
**W-4154 Tönisvorst 2 (DE)**

**EP 0 475 108 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Pulverlacke, deren Bindemittel im wesentlichen aus einer Kombination aus Hydroxyl- und Carbonsäureanhydridgruppen enthaltenden Copolymerisaten mit Polyepoxidverbindungen besteht und die Verwendung derartiger Kombinationen als Bindemittel für Pulverlacke.

Die Verwendung von Kombinationen aus Polyacrylaten mit mindestens zwei Carboxylgruppen pro Molekül und Polyepoxidverbindungen, gegebenenfalls auch auf Acrylatbasis, ist bereits bekannt.

Die japanische Patentanmeldung 73-29 319 (Veröffentlichungsnummer: 49 116 134; C.A. 82(24): 157 882 e) beschreibt wärmehärtbare Pulverbeschichtungsmittel bestehend aus A) einem festen Acrylatharz, das hergestellt wird durch Umsetzung eines Hydroxylgruppen aufweisenden Copolymerisats mit einer Polycarbonsäure oder deren Anhydrid, und B) einem Epoxidgruppen aufweisenden Copolymerisat. Die beiden Polymerisate werden als etwa 100 °C heiße Schmelzen gemischt und nach Abkühlen gemahlen. Die Aushärtung der auf Metalloberflächen aufgebrachten Beschichtungen erfolgt bei Temperaturen von etwa 200 °C.

Die DE-OS 23 47 680 beschreibt wärmehärtbare Pulverlacke bestehend aus A) zu 50 bis 97 % aus einem, ein Molekulargewicht zwischen 3000 und 15000 und einen Erweichungspunkt zwischen 80 und 150 °C aufweisenden, Epoxidgruppen enthaltenden Copolymerisat, und B) zu 50 bis 3 %. aus einem carboxylgruppenhaltigen Härter mit einem Erweichungspunkt von mindestens 50 °C, wobei der Härter auch ein Carboxylgruppen aufweisendes Copolymerisat sein kann.

Die Japanische Patentanmeldung 75-146 705 (Veröffentlichungsnummer: 52 069 936; C.A. 88(12): 75 374 a) beschreibt wärmehärtbare Pulverlacke auf Basis von Glycidyl(meth)acrylat-Copolymeren bestehend aus A) 100 Teilen eines Copolymerisats (Tg 30 bis 100 °C, Molekulargewicht 3000 bis 70 000) enthaltend 10 bis 50 Gew.-% Glycidyl(meth)acrylat, 30 bis 85 Gew.-% Acrylsäure-$C_{1-12}$-alkylester und 0 bis 60 Gew.-% eines weiteren Comonomeren, B) 0,1 bis 30 Teilen eines die Fließeigenschaften regelnden Copolymeren (Tg > 50 °C, Molekulargewicht > 1000) enthaltend 30 bis 85 Gew.-% (Meth)Acrylsäurealkylester, 1 bis 50 Gew.-% eines Monomeren mit einer Glycidyl-, Carboxyl-, Hydroxyl- oder Amidgruppe und 0 bis 69 Gew.-% eines weiteren Monomeren sowie c) 3 bis 55 Teilen einer aliphatischen Dicarbonsäure mit 4 bis 20 Kohlenstoffatomen. Die Lacke zeigen eine gute Haftung an Metallen ohne vorhergehende Oberflächenbehandlung.

Die US-PS 39 91 132 und US-PS 39 91 133 beschreiben hitzehärtbare Pulverlacke aus A) einem epoxidhaltigen Copolymeren bestehend aus 5 bis 20 % Glycidylmethacrylat und 80 bis 95 % anderen Comonomeren (Tg 40 bis 90 °C, Molekulargewicht 1500 bis 15 000) und B) einem Anhydridvernetzer, entweder aus einem Dicarbonsäureanhydrid oder aus einem Dicarbonsäureanhydrid-Homopolymer, mit der Maßgabe, daß das Copolymere difunktionell ist, und aus im Falle von US-PS 39 91 132 mindestens 2 bis 10 % eines ungesättigten Säureamids und im Falle von US-PS 39 91 133 mindestens 2 bis 10 % eines $C_5$-$C_7$-Hydroxyalkyl(meth)acrylats neben 70 bis 93 % anderen Comonomeren wie z.B. Methyl-, Butylmethacrylat, Styrol, Vinyltoluol aufgebaut ist. Darüber hinaus ist soviel Anhydridhärter durch eine Hydroxycarbonsäure ersetzt, daß auf jede funktionelle Gruppe des Copolymeren 0,1 bis 0,4 Carboxylgruppen der Hydroxycarbonsäure entfallen.

Jetzt wurde überraschend gefunden, daß Copolymerisate olefinisch ungesättigter Verbindungen, die sowohl eingebaute Hydroxylgruppen als auch eingebaute intramolekulare Carbonsäureanhydridgruppen im gleichen Molekül enthalten in Kombination mit Polyepoxiden ausgezeichnete Bindemittel für Pulverlacke darstellen, sofern sie den diesbezüglichen Anforderungen bezüglich des Erweichungspunktes bzw. -bereichs genügen. Der besondere Vorteil solcher Systeme liegt in der Tatsache, daß in der Komponente A) zunächst noch keine freien Carboxylgruppen, welche zur Vernetzung mit den Epoxidgruppen der Komponente B) erforderlich sind, vorliegen, sondern daß diese Carboxylgruppen erst aus der Reaktion der Carbonsäureanhydrid- mit den Hydroxylgruppen durch Einwirkung von Hitze gebildet werden. Somit weisen diese Bindemittelkombinationen eine erheblich bessere Lagerstabilität bei Raumtemperatur auf, als vergleichbare Systeme des Standes der Technik, welche freie Carboxylgruppen enthalten. Ein weiterer Vorteil der erfindungsgemäßen Bindemittelkombinationen besteht darin, daß es sich bei der Härtungsreaktion um einen sogenannten "double-cure"-Mechanismus handelt, das heißt, zunächst reagieren die Hydroxylgruppen der Komponente A) unter Hitze- bzw. Katalysatoreinwirkung mit den Anhydridgruppen der Komponente A) unter Anhydridringöffnung und Ausbildung von Carboxylgruppen. Diese Reaktion stellt schon einen Vernetzungsvorgang dar. Darüber hinaus können jedoch die neu entstandenen Carboxylgruppen mit den Epoxidgruppen der Komponente B) reagieren, was eine zusätzliche Vernetzung zur Folge hat.

Aufgrund der erzielbaren hohen Vernetzungsdichten resultieren aus den erfindungsgemäßen Bindemittelkombinationen Beschichtungen, die ein sehr hohes Niveau bezüglich Chemikalien- und Lösungsmittelbeständigkeit aufweisen.

Die erfindungsgemäßen Bindemittelkombinationen weisen daher bei Raumtemperatur oder mäßig erhöhten Temperaturen unterhalb ihres Erweichungsbereichs eine ausgezeichnete Lagerstabilität auf und gestatten andererseits die Herstellung von Beschichtungen mit hervorragenden anwendungstechnischen Eigenschaften.

Gegenstand der Erfindung sind unterhalb 30° C feste Pulverlacke, bestehend im wesentlichen aus

A) 20 bis 99 Gewichtsteilen einer unterhalb 30° C festen Copolimerisat-Komponente, bestehend aus mindestens einem Copolymerisat von olefinisch ungesättigten Verbindungen mit einem als Gewichtsmittel bestimmten Molekulargewicht von 1500 bis 75000, welches sowohl

(i) 0,1 bis 6,0 Gew.-% an freien Hydroxylgruppen als auch

(ii) 1 bis 30 Gew.-% an Carbonsäureanhydridgruppen (berechnet als $C_4H_2O_3$)

chemisch gebunden enthält,

B) 1 bis 80 Gewichtsteilen einer Polyepoxid-Komponente, bestehend aus mindestens einem organischen Polyepoxid mit mindestens zwei Epoxidgruppen pro Molekül und gegebenenfalls

C) aus der Pulverlack-Technologie bekannten Hilfs- und Zusatzmittel

mit der Maßgabe, daß auf jede Anhydridgruppe der Komponente A) 0,2 bis 8 Epoxidgruppen der Komponente B) entfallen.

Gegenstand der Erfindung ist auch die Verwendung von unterhalb 30° C festen Kombinationen aus den oben genannten Komponenten A) und B) in den genannten Mengenverhältnissen als Bindemittel oder Bindemittelkomponente in Pulverlacken.

Die eigene ältere deutsche Patentanmeldung P 39 20 413.8 befaßt sich zwar bereits mit Kombinationen aus A) Copolymerisaten, die sowohl freie Hydroxylgruppen als auch intramolekulare Carbonsäureanhydridgruppen in chemisch eingebauter Form enthalten, und B) Polyepoxiden, jedoch werden diese Bindemittelkombinationen gemäß dieser älteren Anmeldung ausschließlich als Bindemittel für lösungsmittelhaltige Lacke eingesetzt. Irgendwelche Hinweise auf die Verwendbarkeit derartiger oder ähnlicher Kombinationen als Bindemittel für Pulverlacke werden in der älteren Anmeldung nicht gegeben.

Die erfindungsgemäßen Bindemittel können aus pulverförmigen Komponenten A) und pulverförmigen Komponenten B) bestehen, in welchem Falle jedes pulverförmige Bindemittelteilchen entweder aus A) oder aus B) besteht. Vorzugsweise handelt es sich bei den Bindemitteln jedoch um "gemischte Pulver AB", d.h. um Pulver bei denen jedes einzelne Pulverteilchen sowohl Komponente A) als auch Komponente B) enthält. Solche "gemischte Pulver AB" werden dann erhalten, wenn die Bindemittel bzw. Pulverlacke in Extrudern oder Knetern hergestellt werden, wie dies weiter unten beschrieben wird.

Die Copolymerisatkomponente A) besteht aus mindestens einem Copolymerisat, welches sowohl chemisch eingebaute, freie Hydroxylgruppen in einer Menge von 0,1 bis 6,0 Gew.-%, vorzugsweise 0,2 bis 4,0 Gew.-%, als auch chemisch eingebaute intramolekulare, cyclische Carbonsäureanhydridgruppen der Formel

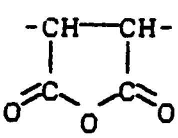

und/oder

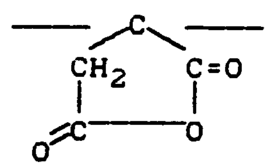

in einer Menge von 1 bis 30 Gew.-%, vorzugsweise 5 bis 25 Gew.-%, enthält, Die Copolymerisate weisen ein, nach der Methode der Gelpermeationschromatographie unter Verwendung von Polystyrol als Standard bestimmbares Molekulargewicht (Gewichtsmittel) von 1.500 bis 75.000, vorzugsweise 2.000 bis 60.000 und besonders bevorzugt 3.000 bis 40.000, auf. Es handelt sich bei den Copolymerisaten um solche auf Basis von vorzugsweise einfach olefinisch ungesättigten Monomeren.

Zur Herstellung der Copolymerisate kommen drei Gruppen von olefinisch ungesättigten Monomeren zum Einsatz und zwar

a) Hydroxylgruppen enthaltende, olefinisch ungesättigte Monomere,

b) intramolekulare Säureanhydridgruppen enthaltende, olefinisch ungesättigte Monomere und

c) Hydroxylgruppen- und Säureanhydridgruppen-freie, nichtfunktionelle, olefinisch ungesättigte Monomere.

Die Monomeren a) werden im allgemeinen in einer Menge von 0,5 bis 50, vorzugsweise 5 bis 40 Gew.-Teilen, die Monomeren b) in einer Menge von 1 bis 30, vorzugsweise 5 bis 25 Gew.-Teilen, und die Monomeren c) in einer Menge von 20 bis 98,5, vorzugsweise 35 bis 90 Gew.-Teilen, eingesetzt, wobei außerdem zu berücksichtigen ist, daß die Anteile der einzelnen Monomeren in dem der Copolymerisation

zuzuführenden Gemisch so bemessen werden, daß in den Copolymerisaten die obengenannten Mengen an chemisch eingebauten Hydroxyl- und Säureanhydridgruppen vorliegen. Der Gehalt der Copolymerisate an diesen Gruppierungen entspricht dem Gehalt des Monomerengemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl- und Methacrylsäure wie z.B, Hydroxyethyl(meth)acrylat, Hydroxypropyl(meth)acrylat, 4-Hydroxybutyl(meth)acrylat; Hydroxyalkylvinylether wie z.B. Hydroxyethylvinylether oder Hydroxybutylvinylether; Allylalkohol; Hydroxyderivate des (Meth)-acrylamids wie z.B. N-(3-Hydroxy-2,2-dimethylpropyl)-(meth)acrylamid; Umsetzungsprodukte von Glycidyl-(meth)acrylat mit Monocarbonsäuren; Umsetzungsprodukte von (Meth)acrylsäure mit Monoepoxidverbindungen; sowie Umsetzungsprodukte der zuvor genannten OH-funktionellen, olefinisch ungesättigten Verbindungen mit $\epsilon$-Caprolacton oder Butyrolacton.

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Hydroxylgruppen- und Säureanhydridgruppen-freien, vorzugsweise einfach olefinisch ungesättigten Monomeren, wie sie auch bereits bei den Verfahren des obengenannten Standes der Technik als Monomere eingesetzt worden sind.

Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten wie beispielsweise Styrol, Vinyltoluol, $\alpha$-Methylstyrol, $\alpha$-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylether, n-Propylvinylether, Isopropylvinylether, n-Butylvinylether und Isobutylvinylether; Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden, mit der Maßgabe, daß diese Auswahl der bei der Herstellung der
Copolymerisate eingesetzten Monomere so erfolgt, daß die resultierenden Copolymerisate unterhalb 30 °C, vorzugsweise unterhalb 40 °C fest sind und bei Temperaturen von oberhalb 150 °C Flüssigkeiten darstellen. Diese Bedingungen besagen, daß die Copolymerisate einen mittels der Differentialthermoanalyse (DTA) bestimmten Erweichungspunkt bzw. -bereich innerhalb des Bereichs von 30 bis 150, vorzugsweise 40 bis 120 °C aufweisen. Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Erweichungstemperatur der Copolymeren führen, zu "hartmachenden" Monomeren, die zur Erhöhung der Erweichungstemperatur des Copolymeren führen, zur Anwendung gelangt. "Weichmachende" Monomere sind beispielsweise
Alkylester der Acrylsäure wie z.B. Methylacrylat, Ethylacrylat, Butylacrylat, Isobutylacrylat, 2-Ethylhexylacrylat, Laurylacrylat, Ethyldiglykolacrylat; Vinylester wie z.B. Vinylpropionat; Vinylether wie z.B. Vinylmethylether, Vinylethylether, Vinylpropylether, Vinylisobutylether, Vinyloctadecylether, Vinylcyclohexylether.

"Hartmachende" Monomere sind beispielsweise Alkylester der Methacrylsäure wie z.B. Methylmethacrylat, Ethylmethacrylat, Isobutylmethacrylat, Cyclohexylmethacrylat, 2-Phenylethylmethacrylat, Tetrahydrofurfurylmethacrylat, Ispropylmethacrylat, tert.-Butylmethacrylat, Neopentylmethacrylat, Isobornylmethacrylat, Benzylmethacrylat; Vinylaromaten wie z.B. Styrol, Vinyltoluol, $\alpha$-Methylstyrol, $\alpha$-Ethylstyrol; heterocyclische Vinylverbindungen wie z.B. Vinylpyrrolidon, Vinylcaprolactam oder Vinylcarbazol.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 140 °C, vorzugsweise 80 bis 120 °C, in Gegenwart von Radikalbildnern und gegebenenfalls Molekulargewichtsreglern copolymerisiert.

Die Herstellung der Copolymerisate erfolgt vorzugsweise in inerten Lösungsmitteln. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 20 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide wie beispielsweise tert.-Butylhydroperoxid, Cumolhydroperoxid; Dialkylperoxide wie Dicumylperoxid; tert.-Butyl-cumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder bei ca. 120 bis 160 °C und einem Vakuum von 100 bis 300 mbar entfernt und die erfindungsgemäß zu verwendenden Copolymerisate gewonnen werden.

Die Komponente B) besteht aus mindestens einer organischen Verbindung, die mindestens zwei Epoxidgruppen pro Molekül aufweist und eine Glasübergangstemperatur (DTA) von 0 bis 150 °C, vorzugsweise von 30 bis 150 °C und besonders bevorzugt von 40 bis 120 °C besitzt. Komponenten B) mit einer unter 30 °C liegenden Glasübergangstemperatur bzw. mit einem unter 30 °C liegenden Schmelzpunkt, die gegebenenfalls bei Raumtemperatur flüssig sind, können in Kombination mit Komponenten A) eingesetzt werden, die eine verhältnismäßig hohe Glasübergangstemperatur bzw. einen verhältnismäßig hohen Schmelzpunkt innerhalb der obengenannten Bereiche aufweisen, allerdings vorausgesetzt, daß die Herstellung der Pulverbindemittel bzw. Pulverlacke nach der bevorzugten Methode, d.h. in Knetern oder Extrudern hergestellt werden, in welchem Falle die Kombinationen aus A) und B) selbst dann oberhalb 30 °C fest sind, wenn Komponenten B) der genannten Art eingesetzt wurden. Die bevorzugten Verbindungen der Komponente B) weisen (im statistischen Mittel) 2 bis 50, vorzugsweise 2 bis 10 Epoxidgruppen pro Molekül auf.

Typische Beispiel für geeignete oder bevorzugt geeignete Polyepoxide sind solche auf Bisphenol-A-Basis, wie z.B.
®Epikote*1001 (Epoxidgruppengehalt ca. 2 mol/kg),
®Epikote*1002 (Epoxidgruppengehalt ca. 1,5 mol/kg),
®Epikote*1055 (Epoxidgruppengehalt ca. 1,2 mol/kg),
®Epikote*1007 (Epoxidgruppengehalt ca. 0,55 mol/kg),
®Epikote*3003 (Epoxidgruppengehalt ca. 1,3 mol/kg);
Glycidylether von Heterocyclen wie z.B. Triglycidylisocyanurat oder Triglycidylurazol; Glycidylester von Dicarbonsäuren wie z.B. Diglycidylterephthalat; Epoxidgruppen enthaltende Copolymerisate mit einer Glasübergangstemperatur von ≥30 °C, hergestellt z.B. durch Mitverwendung von Glycidyl(meth)acrylat als Comonomer. Bevorzugte Polyepoxidkomponente B) sind Triglycidylisocyanurat, Terephthalsäurediglycidylester oder Glycidylether auf Bisphenol-A-Basis.

Bei der gegebenenfalls in den erfindungsgemäßen Pulverlacken vorliegenden Komponente C) handelt es sich um die in der Pulverlack-Technologie bekannten Hilfs- und Zusatzmittel. Zu nennen sind dabei Pigmente wie z.B. Titandioxid, Verlaufsmittel wie z.B. Siliconverbindungen und Katalysatoren.

Obwohl die Pulverlacke an sich ohne Beschleunigungsmittel eingebrannt werden können, besteht die Möglichkeit der Zugabe von Katalysatoren, die die Reaktion zwischen Hydroxyl- und Carbonsäureanhydridgruppen einerseits und Epoxid- und Carbonsäuregruppen andererseits beschleunigen und dadurch die

* Handelsprodukt der Fa. Shell

Einbrennzeit und/oder die Einbrenntemperatur reduzieren.

Solche Katalysatoren sind z.B. tert. Aminogruppen aufweisende Verbindungen, wie z.B. 1,4-Diazabicyclo(2.2.2)-octan, 1,8-Diazabicyclo(5.4.0)-undec-7-en, 1,5-Diazabicyclo(4.3.0)non-5-en, 1,2-Dimorpholinoethan und 1,3,5-Tricyclohexylhexahydro-1,3,5-triazin; Salze, basierend auf tert.-Aminogruppen und quartären Ammoniumgruppen enthaltenden Verbindungen wie z.B. (2-Hydroxyethyl)-trimethylammoniumchlorid, Triethylaminhydrochlorid, Tetrabutylammoniumchlorid, Tetraethylammoniumbromid, Tetrahexylammoniumchlorid und Tetramethylammoniumchlorid; organische Zinnverbindungen wie z.B. Zinndioctoat, Dibutylzinndilaurat, Dibutylzinndiacetat und Dibutylzinndichlorid; Phosphorverbindungen, wie z.B. Triphenylphosphin.

Zur Herstellung der gebrauchsfertigen pulverförmigen Überzugsmittel werden die lösungsmittelfreien Copolymerisate A), die Polyepoxidverbindungen B) und gegebenenfalls die Zusatzmittel C) in Extrudern oder Knetern bei Temperaturen von vorzugsweise 100 bis 120 °C in der Schmelze homogenisiert. Der erstarrte Feststoff wird gemahlen und durch Sieben Von Kornanteilen oberhalb der gewünschten Korngrößen, beispielsweise oberhalb 0,1 mm befreit. Die pulverförmigen Überzugsmittel können selbstverständlich auch durch Abmischen von pulverförmigen Komponenten A), B) und gegebenenfalls C), die in einem separaten Verfahrensschritt hergestellt worden sind, hergestellt werden.

Die Art und die Mengenverhältnisse der Einzelkomponenten A) und B) werden im übrigen vorzugsweise so gewählt, daß auf jede Säureanhydridgruppe der Komponente A) 0,2 bis 4, vorzugsweise 0,5 bis 2 Hydroxylgruppen der Komponente A) und 0,2 bis 8, vorzugsweise 0,4 bis 4 und besonders bevorzugt 0,8 bis 1,5 Epoxidgruppen der Komponente B) entfallen.

Die so hergestellten pulverförmigen Überzugsmittel können nach üblichen Pulverauftragsverfahren wie z.B. elektrostatischem Pulversprühen oder Wirbelsintern, auf die zu überziehenden hitzeresistenten Substrate aufgebracht werden. Die Härtung der Überzüge kann durch Erhitzen auf Temperaturen von 130 bis 220 °C, vorzugsweise 150 bis 200 °C erfolgen. Man erhält dabei harte, glänzende, lösungsmittelfeste Überzüge mit hervorragenden Korrosionsschutzeigenschaften und einer guten Wärmefarbstabilität. Erfindungsgemäß können beliebige hitzeresistente Substrate wie beispielsweise solche aus Glas oder Metallen beschichtet werden.

Die in den nachfolgenden Beispielen genannten Teile und Prozente sind, sofern nicht anders angegeben, Gewichtsteile bzw. Gewichtsprozente.

I. Allgemeine Herstellungsvorschrift für die Hydroxyl- und Anhydridgruppen enthaltenden Copolymerisate $A_1$ bis $A_4$

In einem 25-1-Edelstahldruckreaktor mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 3 Stunden) und Teil III (Zugabe über einen Zeitraum von insgesamt 3,5 Stunden) zudosiert. Anschließend wird 1 Stunde bei der angegebenen Temperatur nachgerührt.

Die erhaltenen Polymerlösungen werden in einem handelsüblichen Ausdampfextruder bei einer Temperatur von ca. 150 °C, einer Verweilzeit von ca. 2 Minuten und einem Vakuum von ca. 260 mbar vollständig vom Lösungsmittel befreit, anschließend abgekühlt und granuliert.

Die Reaktionstemperaturen und die Zusammensetzungen der Teile I bis III sind in Tabelle I, zusammen mit den Kenndaten der erhaltenen Copolymerisate aufgeführt.

Tabelle I (Mengenangaben in g)

| Copolymerisate | $A_1$ | $A_2$ | $A_3$ | $A_4$ |
|---|---|---|---|---|
| Teil I | | | | |
| Toluol | 8000 | 8000 | 8000 | 8000 |
| Teil II | | | | |
| Methylmethacrylat | 4290 | 3718 | 4592 | 3118 |
| Butylmethacrylat | 2688 | - | 3024 | - |
| 2-Ethylhexylmethacrylat | - | 3136 | - | - |
| Butylacrylat | - | - | - | 3764 |
| Styrol | 1742 | 1680 | 1344 | 1612 |
| Hydroxyethylmethacrylat | 1162 | 1266 | 1064 | 1290 |
| Maleinsäureanhydrid | 870 | 952 | 728 | 968 |
| Teil III | | | | |
| tert.-Butylperoxy-2-ethyl-hexanoat (70 %ig in Isododecan) | 640 | 640 | 640 | 640 |
| Toluol | 608 | 608 | 608 | 608 |
| Polymerisationstemperatur (°C) | 110 | 110 | 110 | 110 |
| Temperatur der Nachrührphase (°C) | 90 | 90 | 90 | 90 |
| Festgehalt (%) | 55,2 | 55,4 | 55,5 | 55,6 |
| Viskosität (23°C, mPa.s) | 15670 | 18490 | 21340 | 3766 |
| Erweichungspunkt des Festharzes (DTA,°C) | 71,6 | 60,4 | 53,5 | 40,8 |

II. Herstellung der erfindungsgemäßen Pulverlackbeschichtungsmittel

Die Copolymerisate $A_1$ bis $A_4$ werden jeweils mit einem Polyepoxid B) und anderen Hilfs- und Zusatzmitteln C) in einem Extruder aufgeschmolzen und homogenisiert. Nach dem Erstarren der ausgetragenen Schmelze wird das Produkt gemahlen, durch Sieben von Anteilen mit einem über 0,1 mm liegenden Teilchendurchmesser befreit, mittels einer elektrostatischen Sprüheinrichtung auf Prüfbleche appliziert und anschließend 15 Minuten bei 180 °C ausgehärtet.

Die Lösungsmittelbeständigkeit der ca. 55 µm dicken Lackfilme wird durch einen Wischtest mit einem Acetongetränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt.

In Tabelle II sind die jeweiligen Formulierungen in Gewichtsprozenten sowie die Lösungsmittelbeständigkeit als Grad der Vernetzung aufgeführt.

**Tabelle II** Formulierungen der erfindungsgemäßen Pulverbeschichtungsmittel, Angaben in Gewichtsprozenten

| Formulierung | 1 | 2 | 3 | 4 | 5 | 6 | 7 |
|---|---|---|---|---|---|---|---|
| Copolymerisat | 55,7 $A_1$ | 54,1 $A_1$ | 55,2 $A_2$ | 37,3 $A_2$ | 57,6 $A_2$ | 51,2 $A_3$ | 51,1 $A_4$ |
| TGIC 1) | 4,3 | - | 4,8 | - | 2,4 | 8,8 | 8,9 |
| DGT 2) | - | 5,9 | - | - | - | - | - |
| ®Epikote 1001 3) | - | - | - | 22,7 | - | - | - |
| Titandioxid | 40,0 | 40,0 | 40,0 | 40,0 | 40,0 | 40,0 | 40,0 |
| Acetonwischtest (Anzahl der Doppelhübe) | 50 | 45 | 50 | 30 | 50 | 50 | 45 |

1) Triglycidylisocyanurat
2) Diglycidylterephthalat
3) Handelsprodukt der Fa. Shell

## Patentansprüche

1. Unterhalb 30° C feste Pulverlacke, bestehend im wesentlichen aus
   A) 20 bis 99 Gewichtsteilen einer unterhalb 30° C festen Copolimerisat-Komponente, bestehend aus mindestens einem Copolymerisat von olefinisch ungesättigten Verbindungen mit einem als Gewichtsmittel bestimmten Molekulargewicht von 1500 bis 75000, welches sowohl
      (i) 0,1 bis 6,0 Gew.-% an freien Hydroxylgruppen als auch
      (ii) 1 bis 30 Gew.-% an Carbonsäureanhydridgruppen (berechnet als $C_4H_2O_3$)
   chemisch gebunden enthält,
   B) 1 bis 80 Gewichtsteilen einer Polyepoxid-Komponente, bestehend aus mindestens einem organischen Polyepoxid mit mindestens zwei Epoxidgruppen pro Molekül und gegebenenfalls
   C) aus der Pulverlack-Technologie bekannten Hilfs- und Zusatzmittel

   mit der Maßgabe, daß auf jede Anhydridgruppe der Komponente A) 0,2 bis 8 Epoxidgruppen der Komponente B) entfallen.

2. Pulverlacke gemäß dem Anspruch 1, dadurch gekennzeichnet, daß die Copolymerisate der Komponente A) durch radikalisch initiierte Copolymerisation erhaltene Copolymerisate aus
   a) 0,5 bis 50 Gewichtsteilen copolymerisierbaren, Hydroxylgruppen enthaltenden Monomeren,
   b) 1 bis 30 Gewichtsteilen copolymerisierbaren, Anhydridgruppen enthaltenden Monomeren, sowie
   c) 20 bis 98,5 Gewichtsteilen copolymerisierbaren, Hydroxyl- und Anhydridgruppen-freien, nichtfunktionellen Monomeren

   darstellen.

3. Pulverlacke gemäß den Ansprüchen 1 und 2, dadurch gekennzeichnet, daß in den Copolymerisaten der Komponente A) als anhydridfunktionelle Monomere Maleinsäureanhydrid und/oder Itaconsäureanhydrid in copolymerisierter Form vorliegen.

4. Pulverlacke gemäß den Ansprüchen 1 bis 3, dadurch gekennzeichnet, daß in den Copolymerisaten der Komponente A) als hydroxyfunktionelle Monomere Hydroxyalkylester der Acryl und/oder Methacrylsäure vorliegen.

5. Pulverlacke gemäß den Ansprüchen 1 bis 4, dadurch gekennzeichnet, daß es sich bei der Polyepoxidkomponente B) um Triglycidylisocyanurat und/oder Terephthalsäurediglycidylester handelt.

6. Pulverlacke gemäß den Ansprüchen 1 bis 4, dadurch gekennzeichnet, daß es sich bei der Polyepoxidkomponente B) um Glycidylether auf Bisphenol-A-Basis oder um epoxyfunktionelle Copolymerisate handelt.

7. Verwendung von unterhalb 30° C festen Kombinationen aus
   A) 20 bis 99 Gewichtsteilen einer unterhalb 30° C festen Copolymerisat-Komponente, bestehend aus mindestens einem Copolymerisat von olefinisch ungesättigten Verbindungen mit einem als Gewichtsmittel bestimmten Molekulargewicht von 1500 bis 75000, welches sowohl
      (i) 0,1 bis 6,0 Gew.-% an freien Hydroxylgruppen als auch
      (ii) 1 bis 30 Gew.-% an Carbonsäureanhydridgruppen (berechnet als $C_4H_2O_3$)
   chemisch gebunden enthält, und
   B) 1 bis 80 Gewichtsteilen einer Epoxid-Komponente, bestehend aus mindestens einem organischen Polyepoxid mit mindestens zwei Epoxidgruppen pro Molekül,

   mit der Maßgabe, daß auf jede Anhydridgruppe der Komponente A) 0,2 bis 8 Epoxidgruppen der Komponente B) entfallen, als Bindemittel oder Bindemittelkomponente in Pulverlacken.

## Claims

1. Powder coatings solid below 30° C consisting essentially of
   A) 20 to 99 parts by weight of a copolymer component solid below 30° C consisting of at least one copolymer of olefinically unsaturated compounds having a weight average molecular weight of 1,500 to 75,000 which contains both
      (i) 0.1 to 6.0% by weight free hydroxyl groups and

(ii) 1 to 30% by weight carboxylic anhydride groups (expressed as $C_4H_2O_3$)
in chemically bound form, and
B) 1 to 80 parts by weight of an epoxide component consisting of at least one organic polyepoxide containing at least two epoxide groups per molecule and optionally
C) auxiliaries and additives known from powder technology,
with the proviso that, for every anhydride group of component A), there are 0.2 to 8 epoxide groups of component B).

**2.** Powder coatings as claimed in claim 1, characterized in that the copolymers of component A) are copolymers obtained by radical-initiated copolymerization of
a) 0.5 to 50 parts by weight copolymerizable monomers containing hydroxyl groups,
b) 1 to 30 parts by weight copolymerizable monomers containing anhydride groups and
c) 20 to 98.5 parts by weight copolymerizable, nonfunctional monomers free from hydroxyl and anhydride groups.

**3.** Powder coatings as claimed in claims 1 and 2, characterized in that maleic anhydride and/or itaconic anhydride are present in copolymerized form as anhydride-functional monomers in the copolymers of component A).

**4.** Powder coatings as claimed in claims 1 to 3, characterized in that hydroxyalkyl esters of acrylic and/or methacrylic acid are present as hydroxy-functional monomers in the copolymers of component A).

**5.** Powder coatings as claimed in claims 1 to 4, characterized in that the polyepoxide component B) is triglycidyl isocyanurate and/or terephthalic acid diglycidyl ester.

**6.** Powder coatings as claimed in claims 1 to 4, characterized in that the polyepoxide component B) is selected from from glycidyl ethers based on bisphenol A or epoxy-functional copolymers.

**7.** The use of combinations - solid below 30 °C - of
A) 20 to 99 parts by weight of a copolymer component - solid below 30 °C - consisting of at least one copolymer of olefinically unsaturated compounds having a weight average molecular weight of 1,500 to 75,000 which contains both
(i) 0.1 to 6.0% by weight free hydroxyl groups and
(ii) 1 to 30% by weight carboxylic anhydride groups (expressed as $C_4H_2O_3$)
in chemically bound form, and
B) 1 to 80 parts by weight of an epoxide component - solid below 30 °C - consisting of at least one organic polyepoxide containing at least two epoxide groups per molecule,
with the proviso that, for every anhydride group of component A), there are 0.2 to 8 epoxide groups of component B),
as binders or as binder component in powder coatings.

## Revendications

**1.** Laques, vernis et peintures pulvérulents solides en dessous de 30 °C, constitués essentiellement par
A) 20 à 99 parties en poids d'un composant de copolymère solide en dessous de 30 °C, constitué par au moins un copolymère de composés à insaturation oléfinique ayant un poids moléculaire déterminé comme moyenne pondérale de 1.500 à 75.000, qui contient aussi bien
(i) de 0,1 à 6,0% en poids de groupes hydroxyle libres que
(ii) de 1 à 30% en poids de groupes d'anhydrides carboxyliques (calculés comme $C_4H_2O_3$)
liés par voie chimique,
B) 1 à 80 parties en poids d'un composant de polyépoxyde constitué d'au moins un polyépoxyde organique contenant au moins deux groupes époxyde par molécule, et éventuellement
C) des adjuvants et des additifs connus dans la technologie des laques, des vernis et des peintures pulvérulents,
avec cette mesure que, pour chaque groupe anhydride du composant A), on obtient 0,2 à 8 groupes époxyde du composant B).

2. Laques, vernis et peintures pulvérulents selon la revendication 1, caractérisés en ce que les copolymères du composant A) représentent des copolymères obtenus par copolymérisation à déclenchement radicalaire, constitués par

    a) de 0,5 à 50 parties en poids de monomères copolymérisables contenant des groupes hydroxyle,

    b) de 1 à 30 parties en poids de monomères copolymérisables contenant des groupes anhydride, ainsi que

    c) de 20 à 98,5 parties en poids de monomères copolymérisables non fonctionnels exempts de groupes hydroxyle et anhydride.

3. Laques, vernis et peintures pulvérulents selon les revendications 1 et 2, caractérisés en ce que, dans les copolymères du composant A), sont présents, comme monomères anhydride-fonctionnels, l'anhydride maléique et/ou l'anhydride itaconique sous forme copolymérisée.

4. Laques, vernis et peintures pulvérulents selon les revendications 1 à 3, caractérisés en ce que, dans les copolymères du composant A), sont présents, comme monomères hydroxy-fonctionnels, des esters hydroxyalkyliques d'acides acrylique et/ou méthacrylique.

5. Laques, vernis et peintures pulvérulents selon les revendications 1 à 4, caractérisés en ce que, quant au composant de polyépoxyde B), il s'agit de l'isocyanurate de triglycidyle et/ou de l'ester diglycidylique de l'acide téréphtalique.

6. Laques, vernis et peintures pulvérulents selon les revendications 1 à 4, caractérisés en ce que, quant au composant de polyépoxyde B), il s'agit de l'éther glycidylique à base de Bisphénol A ou encore de copolymères époxy-fonctionnels.

7. Utilisation de combinaisons solides en dessous de 30 ° C, constituées par

    A) 20 à 99 parties en poids d'un composant de copolymère solide en dessous de 30 ° C, constitué par au moins un copolymère de composés à insaturation oléfinique ayant un poids moléculaire déterminé comme moyenne pondérale de 1.500 à 75.000, qui contient aussi bien

        (i) de 0,1 à 6,0% en poids de groupes hydroxyle libres que

        (ii) de 1 à 30% en poids de groupes d'anhydrides carboxyliques (calculés comme $C_4H_2O_3$)

    liés par voie chimique,

    B) 1 à 80 parties en poids d'un composant de polyépoxyde constitué d'au moins un polyépoxyde organique contenant au moins deux groupes époxyde par molécule,

    avec cette mesure que, pour chaque groupe anhydride du composant A), on obtient de 0,2 à 8 groupes époxyde du composant B), comme de liants ou composants de liants dans des laques, des vernis et des peintures pulvérulents.